# EUROPEAN PATENT SPECIFICATION

(11) **EP 2 057 890 B1**
(45) Date of publication and mention of the grant of the patent: **21.03.2018**
(21) Application number: 08075784.2
(22) Date of filing: 26.09.2008
(51) Int. Cl.: A01D 78/10

(54) **Haymaking machine**
Heuerntemaschine
Machine à fenaison

(30) Priority: 09.11.2007 NL 1034660
(43) Date of publication of application: 13.05.2009
(60) Divisional application: 12154677.4
(73) Proprietor: Lely Patent N.V., 3147 PB Maassluis (NL)
(72) Inventor: Stremmelaar, Egbert Antonie, 7846 AD Noord-Sleen (NL)
(74) Representative: AGCO Intellectual Property Department

(56) References cited:
- DE-U1- 9 216 498
- NL-C2- 1 022 564

## Description

The invention relates to a haymaking machine according to the preamble of claim 1.

From Dutch patent publication NL 1 022 564 C a haymaking machine is known. This haymaking machine comprises an elongate main frame which has a front end that is arranged to be attached to a pulling vehicle. The haymaking machine further comprises two crop processing members which are rotatable about an axis and which are each attached to a supporting arm. The supporting arms are symmetrically disposed relative to the main frame and each supporting arm is pivotably connected to the main frame in order to be able to pivot the crop processing member between an operative position and a transport position.

In the operative position of the supporting arm, the rotatable axis of the crop processing member is substantially perpendicular to the ground, so that crop processing elements which are rotated about the axis are able to process crops standing or lying on the ground, such as grass or hay. For example, the crop processing elements are rake elements which are arranged to rake together, by rotation about the axis, hay which is located on the ground.

In the transport position, the supporting arm is tilted upward, in which case the axis extends substantially parallel to the ground. In this transport position, the crop processing elements are substantially in a vertical plane. In such a position, the crop processing members and the crop processing elements occupy a space which is favourable for transport.

In general, it is desirable to make the working range of the crop processing members in the operative position as large as possible. In this case, the working range of the crop processing members is also determined by the distance at which the axis of the crop processing member is located relative to the main frame in the operative position.

However, in the transport position, it is on the contrary desirable to keep the dimensions of the haymaking machine limited in order thus to keep the haymaking machine compact during transport. For transport, in particular width and height are important dimensions. Moreover, in many countries the maximum dimensions of an agricultural machine during transport are laid down. Such fixed dimensions are, for example, a maximum height of four metres and a maximum width of three metres, and should not be exceeded in case of transport over the public highway.

The invention aims at providing a haymaking machine which may have a large working width in the operative position, but which has limited dimensions in the transport position.

This object is achieved by providing a haymaking machine comprising:
- an elongate main frame which has a front end that is arranged to be attached to a pulling vehicle in order to move the haymaking machine in a customary direction of travel,
- a supporting arm which is pivotably connected to the main frame about a hinge line, and
- at least one crop processing member which is rotatable about an axis and which is connected to the supporting arm,
wherein the crop processing member, by the pivoting movement of the supporting arm about the hinge line, is at least displaceable between an operative position and a transport position,
characterized in that
the hinge line, when projected on a vertical plane and when projected on a horizontal plane, extends obliquely relative to the customary direction of travel.

By having the hinge line extend, in the vertical plane and the horizontal plane, obliquely relative to the customary direction of travel, i.e. not parallel to the usual direction of travel, it is possible to obtain a large working width of the supporting arm, while in the transport position the supporting arm has limited dimensions, in particular in the height and/or the width of the haymaking machine. In this case, in the transport position, the axis of the relevant crop processing member may be located closer to a longitudinal centre line of the main frame than in the operative position, because, as a result of the oblique hinge line, the supporting arm will also move in the direction of travel relative to the frame. By "when projected on a vertical plane and when projected on a horizontal plane, extends obliquely" is thus meant here that (the direction of) the hinge line has a horizontal and a vertical component unequal to zero.

Preferably, the hinge line extends in the direction of the customary direction of travel towards the main frame and upward relative to the main frame. As a result of such a hinge line, the axis of the crop processing members will move, during tilting from the operative position to the transport position, in the direction of the rear side of the main frame and will also be located closer to the main frame. This movement gives the possibility to obtain a good balance between the maximum height and the maximum width during the transport position and a maximum working width in the operative position.

Such an embodiment has the advantage that, during the tilting of a supporting arm from the operative position to the transport position, the supporting arm will not remain in the same plane perpendicular to the longitudinal centre line of the main frame, but that there will also be a displacement of the supporting arm relative to the main frame in the direction opposite to the customary direction of travel. Consequently, the distance between a location on the main frame and a location on the supporting arm, the location on the main frame being in front of the location on the supporting arm viewed in the direction of travel, will relatively remain greater as a result of the rearward displacement of the supporting arm. This effect may be advantageous for the implementation of certain components.

In particular, this holds for a coupling shaft which, for driving a crop processing member, is provided between a gearbox on the main frame and the axis of the crop processing member. This coupling shaft is designed as a telescopic one in order to enable tilting. However, the range of difference in length of such a telescopic shaft is limited. For a reliable functioning there is namely needed a particular overlap. By having the supporting arm fold obliquely, there is a smaller difference in length of the telescopic coupling shaft between the operative position and the transport position. Consequently, in the operative position, there is a larger range for displacing the crop processing members between different working widths.

In an embodiment, the supporting arm comprises a first portion and a second portion, wherein the first portion is pivotably connected to the main frame in order to be able to move the supporting arm between the operative position and the transport position, and wherein the second portion is tiltably attached to the first portion, it being possible to change the distance between the axis and the main frame by the tilting of the second portion relative to the first portion. By means of such a construction comprising a first portion and a second portion of the hinge arm, it is possible to enlarge the maximum working width in the operative position still further by tilting the second portion away from the first portion of the supporting arm, it being possible to keep the first portion and the second portion close to each other in the transport position, in order to obtain a compact folded-in construction.

In an embodiment, the second portion lies in another plane than does the first portion, in order to compensate the obliquely extending hinge line. The plane of the first portion is the plane which is formed by the A-frame in a preferred embodiment. The plane of the second portion is the plane of rotation of the relevant crop processing member.

It is desirable that, in the transport position, the plane of rotation of the crop processing member is substantially vertical, so that the processing member will occupy a minimum lateral space, whereas, in the operative position, it is on the contrary desirable that the plane of rotation of the processing member is substantially horizontal, in order to process crops. By placing the first portion and the second portion of the supporting arm in different planes, i.e. by having the mentioned planes of the first portion and the second portion extend non-parallel, it is possible to obtain the desired position of the crop processing member in the operative position and in the transport position, despite the oblique hinge line between the supporting arm and the frame. A haymaking machine, but not according to the invention, comprises:
- an elongate main frame which extends in a first direction and which has a front end that is arranged to be attached to a pulling vehicle in order to move the haymaking machine in a customary direction of travel,
- at least one crop processing member which is rotatable about an axis, and
- a supporting arm which is connected to the at least one crop processing member and which is pivotably connected to the main frame about a hinge line, wherein the crop processing member, by the pivoting movement of the supporting arm about the hinge line, is at least displaceable between an operative position and a transport position,
characterized in that
the supporting arm comprises a first portion and a second portion, wherein the first portion is pivotably connected to the main frame in order to be able to move the supporting arm between the operative position and the transport position, and wherein the second portion is tiltably attached to the first portion, and wherein by the tilting of the second portion relative to the first portion the distance between the axis and the main frame can be changed,
wherein a steering rod is provided between the main frame and the second portion, and
wherein a steering rod hinge line of a pivot point between the steering rod and the main frame extends substantially parallel to, but does not coincide with, the hinge line of the supporting arm, in such a manner that, by tilting the supporting arm from the transport position to the operative position, the second portion is tilted relative to the first portion in order to move the crop processing member over a particular distance away from the hinge line.

In order to achieve maximum use of the available height in the transport position, it is desirable to place the crop processing members relatively low in the transport position, while this is not desirable in the operative position.

The relative position of the crop processing members may be set by composing the supporting arm of two portions, wherein the first portion is rotatably connected to the main frame in order to be able to move the supporting arm between the operative position and the transport position, and wherein the second portion is tiltably attached to the first portion, and wherein by the tilting of the second portion relative to the first portion the distance between the axis and the main frame can be changed. The crop processing member is then connected to the second portion.

There is provided a steering rod between the main frame and the second portion in order to set the position of the second portion relative to the first portion. In order to enable the tilting of the supporting arm between the operative position and the transport position, also the steering rod is connected, pivotably about a steering rod hinge line, to the main frame. This steering rod hinge line extends substantially parallel to the hinge line of the first portion of the supporting arm.

By not having the steering rod hinge line coincide with the hinge line of the first portion, but positioning it in such a manner that, by tilting the supporting arm from the transport position to the operative position, the second portion is tilted relative to the first portion in order to move the crop processing member over a particular distance away from the hinge line, the relative position of the crop processing member relative to the first portion of the supporting arm can be adapted during the tilting of the supporting arm between the operative position and the transport position.

By designing the steering rod as an actuator, it is possible to tilt the second portion relative to the first portion by operating the actuator in the operative position and thus to set the working width of the haymaking machine.

The invention will hereinafter be explained in further detail, under reference to the accompanying drawing in which:
Figure 1 shows a top view of a haymaking machine according to the invention, wherein the supporting arms are placed in the operative position;
Figure 2 shows a side view of the haymaking machine of Figure 1;
Figure 3 shows an enlarged top view of a supporting arm of the haymaking machine of Figure 1;
Figure 4 shows a top view of a haymaking machine according to the invention, wherein the supporting arms are placed in the transport position;
Figure 5 shows a side view of the haymaking machine of Figure 4, wherein the supporting arms are placed in the transport position, and
Figure 6 shows a top view of a supporting arm according to Figure 3, wherein the crop processing member is placed in a large-working-width position.

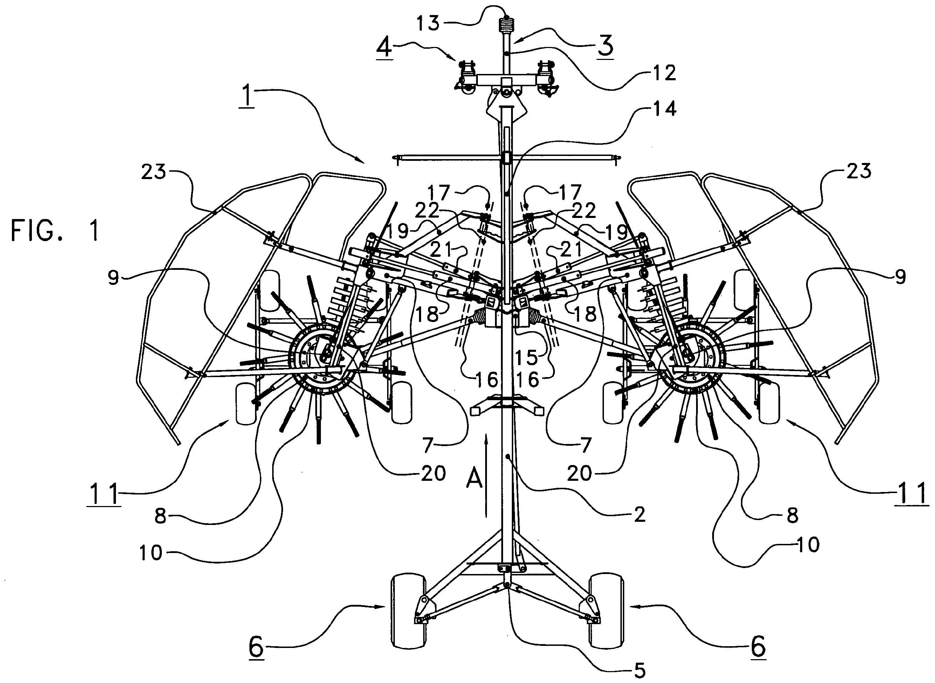

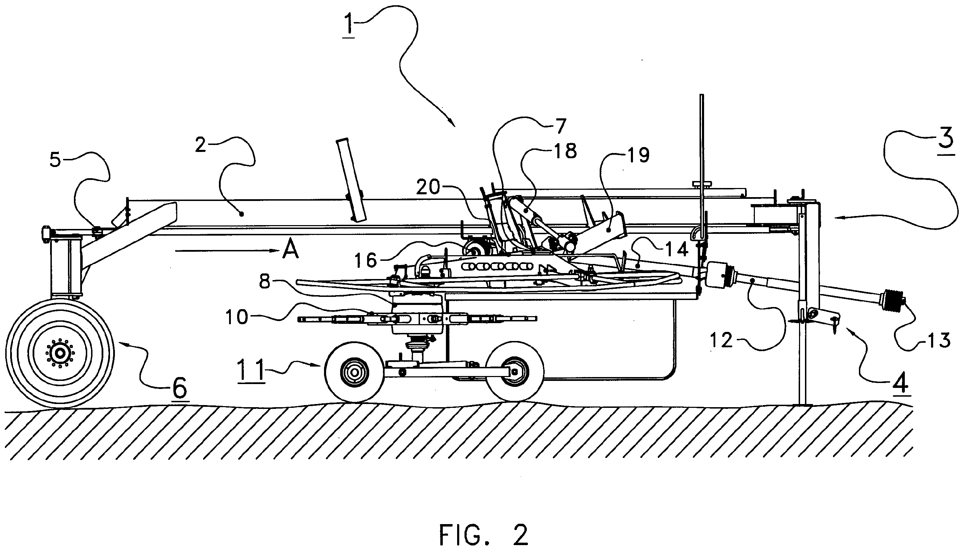

Figures 1 to 5 show top and side views of a haymaking machine according to the invention, denoted in the whole by reference numeral 1. The haymaking machine 1 has an elongate main frame 2. At a front end 3 of the main frame 2 there is provided a device 4 for coupling the haymaking machine 1 to a pulling vehicle such as a tractor (not shown). At the rear end 5 of the main frame 2 there is provided a main wheel set 6 for supporting the haymaking machine 1. When coupled to a tractor or the like, the haymaking machine 1 will be moved during use in a customary direction of travel denoted by an arrow A, which direction of travel substantially coincides with the longitudinal direction of the main frame 2.

On the main frame 2 there are attached two supporting arms 7 which each support a crop processing member 8. The two supporting arms 7 with crop processing members 8 are substantially symmetrically disposed relative to the main frame 2. The crop processing members 8 are rotatably disposed about an axis 9 attached to the respective supporting arm 7. The crop processing members 8 comprise a rotatable main body 10 having a number of crop processing elements (not shown), such as rakes or the like, which are disposed in parallel configuration around the circumference of the main body 10. In the embodiment shown, there is provided a wheel set 11 at each of the supporting arms 7 for supporting the crop processing members 8 during use. In an alternative embodiment, such a wheel set 11 may be omitted.

The crop processing members 8 are drivable by means of a drive mechanism 12. The drive mechanism 12 comprises a coupling 13 which may be connected to the pulling vehicle near the front end 3 of the main frame 2. The coupling 13 drives a central shaft 14 which connects to a gearbox 15 that is attached to the main frame 2. A telescopic coupling shaft 16 extends from the gearbox 15 to the relevant crop processing member 8 for driving the latter.

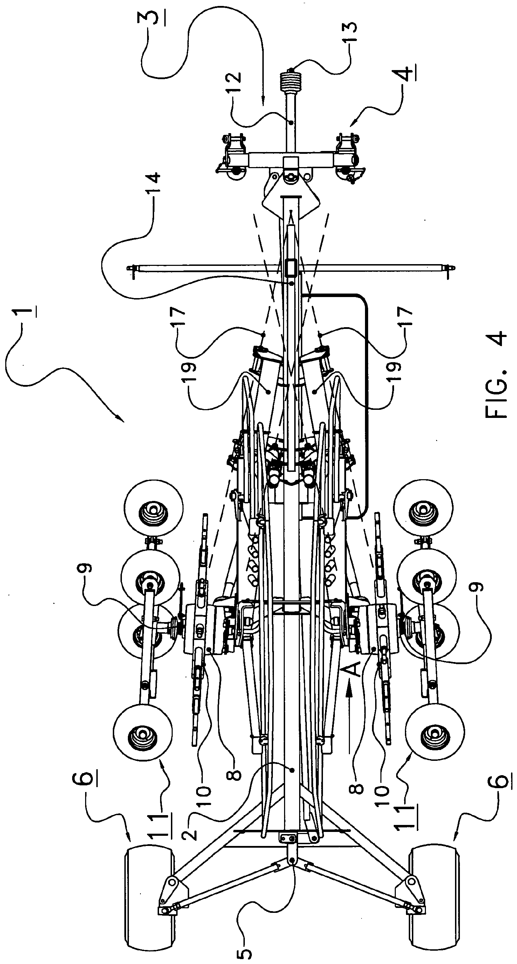

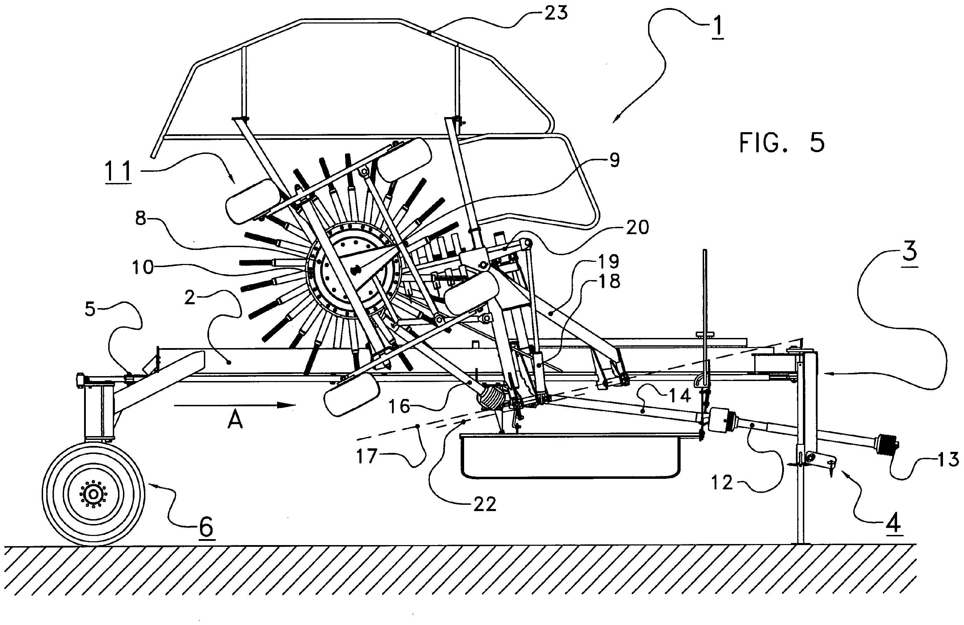

Each supporting arm 7 is disposed, pivotably about a hinge line 17, in such a manner that the crop processing members are movable between an operative position (Figures 1 to 3) in which the crop processing members 8 are placed near the ground and the axis 9 thereof is substantially perpendicular to the ground, and a transport position (Figures 4 and 5) in which the supporting arm 7 is tilted upward, and the axis 9 of the crop processing member 8 extends substantially parallel to the ground.

There is provided an actuator 18 in order to move the supporting arm 7 between the transport position and the operative position. The actuator 18 is, for example, a hydraulic or pneumatic cylinder. In the transport position, it is important that the entire haymaking machine 1 is substantially between the maximum dimensions, often established by competent authorities and public bodies, to be met by such machines during transport. In certain countries, for example, the machine may have a maximum height of four metres and a maximum width of three metres in the transport position. For the relatively large crop processing members 8 it is important to be optimally placed in the operative position in order thus to remain within the established dimensions.

In the operative position it is advantageous, on the contrary, that the crop processing members 8 can reach a largest possible working width. In this case it is desirable that the working width of the crop processing members 8 is adjustable. In order to be able to adjust the working width, each supporting arm 7 comprises a first portion 19 which is rotatably connected to the main frame 2 in order to displace the supporting arm 7 between the operative position and the transport position, and a second portion 20 which is rotatably connected to the first portion 19 and which supports the crop processing member 8. By tilting the second portion 20 relative to the first portion 19, the working width, i.e. the distance from the axis 9 to the main frame 2, of the relevant crop processing member 8 can be adjusted. For this purpose, there is provided a second actuator 21 by means of which the position of the second portion 20 relative to the first portion 19 can be changed. The second actuator 21 is, for example, a hydraulic or pneumatic cylinder.

Advantageously, the hinge line 17 is obliquely disposed in two directions relative to the customary direction of travel A. As a result, it is possible to obtain a larger maximum working width without the maximum dimensions being exceeded in the transport position. In particular, the hinge line 17 extends in the direction of the customary direction of travel A of the main frame 2, i.e. to the front side of the main frame 2, towards the main frame 2 and upward relative to the main frame 2. In other words, the hinge line 17 intersects the symmetry plane of the haymaking machine 1 for the location(s) where the respective supporting arm 7 is connected to the main frame 2 and intersects the ground behind the place(s) where the respective supporting arm 7 is connected to the main frame 2.

The advantage of having the hinge line 17 extend upward in the direction of the front side of the main frame 2 is that the supporting arm 7 in the folded-in transport position will have less height in comparison with the width in the operative position. This makes it possible to obtain a relatively large working width, while the height in the operative position can be limited at the same time.

Moreover, in the embodiment shown, the telescopic coupling shaft 16 will have a less great difference in length between the operative position and the transport position. This has the advantage that, in the transport position, the coupling shaft 16 can be compactly included in the machine 1, while the latter still functions reliably in the folded-out operative position. For, when such a telescopic shaft is extended too far, this may endanger a reliable functioning. In particular, it is important that the telescopic parts of the telescopic coupling shaft 16 maintain a minimum overlap during operation.

In order to enable a pivoting movement of the supporting arm 7, the second actuator 21 is pivotably disposed about a steering rod hinge line 22. The steering rod hinge line 22 extends parallel to the hinge line 17, but does not coincide with it. In the embodiment shown, the steering rod hinge line 22 extends substantially at the same height as the hinge line 17, but closer to the main frame 2. Consequently, when the supporting arm 7 is tilted from the transport position to the operative position, the actuator 21 will protrude outward to a lesser extent. As a result, the second portion 20 will tilt relative to the first portion 19 and the relevant crop processing member 8 will move away from the first portion 19. As a result, during the tilting, it is possible to bring the axis 9 of the crop processing member 8 in a simple manner from a transport position to a particular, for example minimum, working width, so that the working width of the crop processing member 8 will increase.

Such an embodiment is in particular advantageous when, in the operative position, the axis 9 of the crop processing member 8 is tilted closer to the main frame 2 than in the smallest working width in the operative position. By correctly selecting the steering rod hinge line 22 relative to the hinge line 17, such a displacement of the crop processing member 8 during the transition from the operative position to the transport position or vice versa can be obtained automatically.

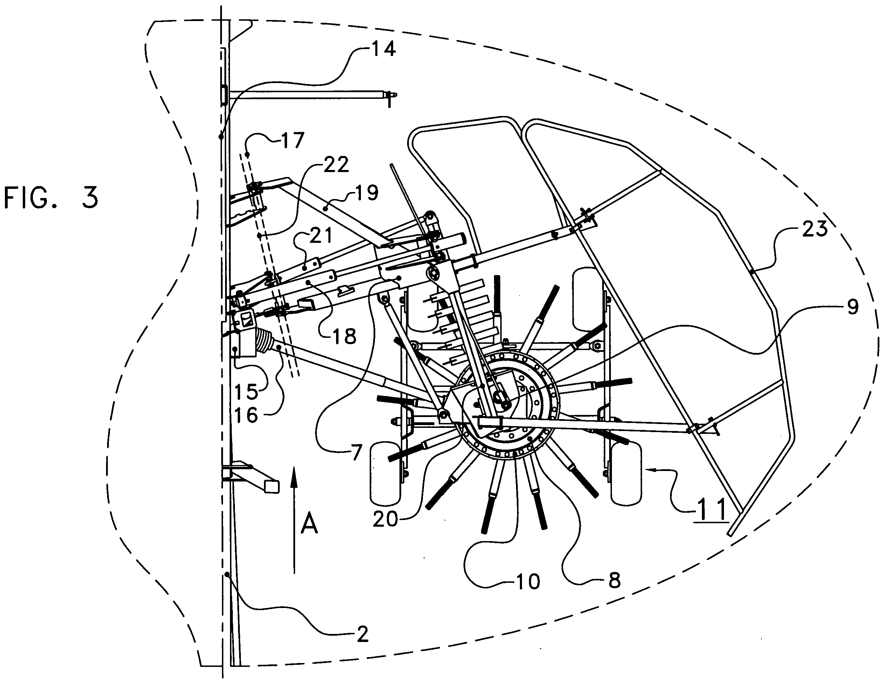

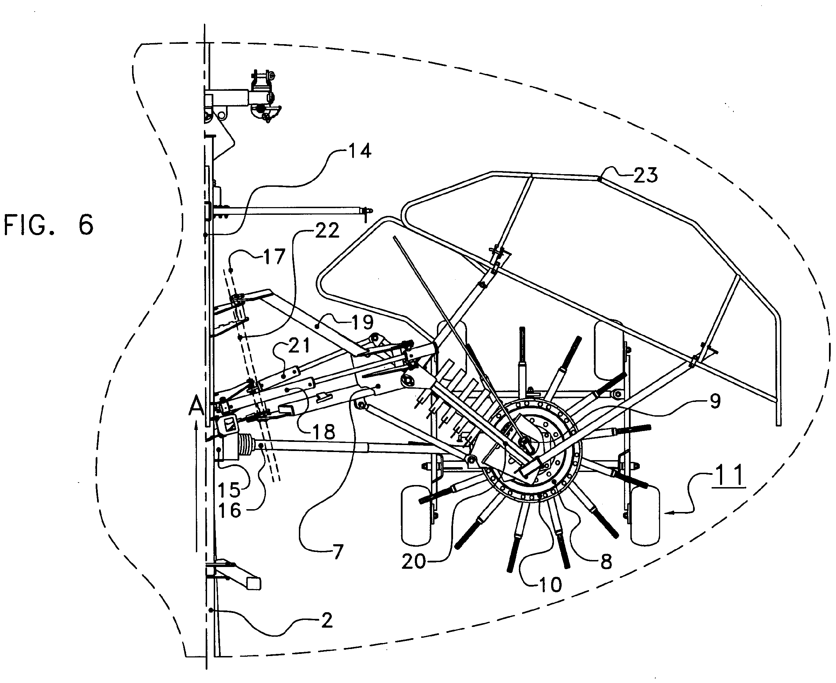

Subsequently, the working width can be adjusted further, if desired, by controlling the second actuator 21. Figure 6, for example, shows that the crop processing members 8, relative to the position shown in Figures 1 and 3, are placed in a larger working width by tilting the second portion 20 relative to the first portion 19. In order to change the working width, the piston rod of the second actuator 21 is withdrawn in order thus to place the axis 9 of the relevant crop processing member 8 further from the main frame 2.

It is pointed out that in the embodiment shown there is provided a second actuator 21 to adjust the working width of the crop processing members 8. During the displacement of the crop processing member 8 in the transition from the transport position to the operative position or vice versa, the second actuator 21 is not operated. This displacement is obtained by not having the hinge line 17 of the supporting arm and the steering rod hinge line 22 of the second actuator 21 coincide.

It is thus also possible to obtain the displacement during the tilting of the supporting arm 7 between the transport position and the operative position by disposing a steering rod which has a fixed length, but in this case it is no longer possible to adjust the working width of the crop processing member 8 in the operative position by means of the steering rod.

In general, it is desirable to dispose the axis 9 of the crop processing member 8 vertically in the operative position so that the rotatable crop processing member 8 rotates substantially in a horizontal plane. It is further desirable that the axis 9 of the processing member 8 extends horizontally in the transport position, so that the plane of rotation of the crop processing member 8 is disposed substantially vertically. In this position, the crop processing member 8 is least wide, which is important to keep the dimensions of the haymaking machine 1, in particular the width thereof, as limited as possible in the transport position.

In the embodiment shown, the first portion 19 and the second portion 20 of the supporting arm 7 are advantageously not disposed in the same plane. This may ensure that, despite the oblique hinge line 17, the crop processing member 8 will be placed in the desired position in the operative position as well as in the transport position.

The haymaking machine 1 comprises protective brackets 23 to protect the crop processing members 8 during use. These protective brackets 23 are capable of being folded in, in order to obtain a smaller maximum height in the transport position. Incidentally, it is pointed out that, in Figures 4 and 5, the protective brackets 23 are not folded in. It is obvious that, after the protective brackets 23 have been folded in, the crop processing members 8 will form the highest point of the haymaking machine 1 in the operative position. Each of the features of the invention makes it possible to place the crop processing members 8 in a relatively lower position, so that it is possible to stay within the laid down dimensions, even when larger crop processing members 8 are used.

## Claims

1. Haymaking machine (1) comprising:
- an elongate main frame (2) which has a front end (3) that is arranged to be attached to a pulling vehicle in order to move the haymaking machine in a customary direction of travel,
- a supporting arm (7) which is pivotably connected to the main frame about a hinge line (17), and
- at least one crop processing member (8) which is rotatable about an axis (9) and which is connected to the supporting arm,
wherein the crop processing member (8), by the pivoting movement of the supporting arm (7) about the hinge line (17), is at least displaceable between an operative position and a transport position,
**characterized in that**
the hinge line (17), when projected on a vertical plane and when projected on a horizontal plane, extends obliquely relative to the customary direction of travel.

2. Haymaking machine (1) according to claim 1, wherein the hinge line (17) extends in the direction of the customary direction of travel towards the main frame (2) and upward relative to the main frame (2).

3. Haymaking machine (1) according to claim 1 or 2, wherein the supporting arm (7) comprises a first portion (19) and a second portion (20), wherein the first portion (19) is pivotably connected to the main frame (2) in order to be able to move the supporting arm (7) between the operative position and the transport position, and wherein the second portion (20) is tiltably connected to the first portion (19), wherein by the tilting of the second portion (20) relative to the first portion (19) the distance between the axis (9) and the main frame (2) can be changed.

4. Haymaking machine (1) according to claim 3, wherein the first portion (19) is A-shaped and comprises two diverging legs whose spaced apart ends are pivotably attached to the main frame (2) and wherein, near spaced together ends of the legs, the second portion (20) is connected to the first portion (19).

5. Haymaking machine (1) according to claim 3 or 4, wherein the second portion (20) is in a different plane than the first portion (19) by way of compensation of the obliquely extending hinge line (17).

6. Haymaking machine (1) according to any one of claims 3-5, wherein a steering rod (21) is provided between the main frame (2) and the second portion (20).

7. Haymaking machine (1) according to claim 6, wherein the steering rod is an actuator (21) which is arranged to set the position of the second portion (20) relative to the first portion (19).

8. Haymaking machine (1) according to claim 6 or 7, wherein a steering rod hinge line (22) of a pivot point between the steering rod (21) and the main frame (2) extends substantially parallel to, but does not coincide with, the hinge line (17) of the supporting arm (7), in such a manner that, by tilting the supporting arm (7) from the transport position to the operative position, the second portion (20) is tilted relative to the first portion (19) in order to move the crop processing member (8) over a particular distance away from the hinge line (17).

9. Haymaking machine (1) according to any one of the preceding claims, wherein between the main frame (2) and the supporting arm (7) there are provided two pivot points which are disposed on the same line of rotation (17).

10. Haymaking machine (1) according to any one of the preceding claims, wherein the haymaking machine (1) comprises a second supporting arm (7) with a second crop processing member (8), wherein the second supporting arm (7) with the second crop processing member (8) is attached, symmetrically relative to the first supporting arm (7), to the main frame (2).

11. Haymaking machine (1) according to any one of the preceding claims, wherein a telescopic coupling shaft (16) is provided between the main frame (2) and the at least one crop processing member (8).

12. Haymaking machine (1) according to any one of the preceding claims, wherein the crop processing member (8) comprises a wheel set (11) in order to support the crop processing member (8) on a ground during transport.

13. Haymaking machine (1) according to any one of the preceding claims, wherein the crop processing member (8) comprises one or more rake elements.

## Patentansprüche

1. Heuerntemaschine (1), mit:
- einem langgestreckten Hauptrahmen (2), der ein vorderes Ende (3) besitzt, das ausgebildet ist, um an einem Zugfahrzeug befestigt zu werden, um die Heuerntemaschine in einer üblichen Fahrtrichtung zu bewegen,
- einem Lagerarm (7), der um eine Gelenklinie (17) verschwenkbar an dem Hauptrahmen befestigt ist, und
- mindestens einem Erntegutverarbeitungselement (8), das um eine Achse (9) drehbar ist und mit dem Lagerarm verbunden ist,
wobei das Erntegutverarbeitungselement (8) durch die Schwenkbewegung des Lagerarms (7) um die Gelenklinie (17) mindestens zwischen einer Betriebsstellung und einer Transportstellung verlagerbar ist,
**dadurch gekennzeichnet, dass**
sich die Gelenklinie (17) in einer Projektion auf eine vertikale Ebene und in einer Projektion auf eine horizontale Ebene schräg relativ zu der üblichen Fahrtrichtung erstreckt.

2. Heuerntemaschine (1) nach Anspruch 1, wobei sich die Gelenklinie (17) in der Richtung der üblichen Fahrtrichtung in Richtung des Hauptrahmens (2) und aufwärts relativ zu dem Hauptrahmen (2) erstreckt.

3. Heuerntemaschine (1) nach Anspruch 1 oder 2, wobei der Lagerarm (7) einen ersten Teil (19) und einen zweiten Teil (20) aufweist, wobei der erste Teil (19) schwenkbar mit dem Hauptrahmen (2) verbunden ist, um den Lagerarm (7) zwischen der Betriebsstellung und der Transportstellung bewegen zu können, und wobei der zweite Teil (20) neigbar mit dem ersten Teil (19) verbunden ist, wobei durch das Neigen des zweiten Teils (20) relativ zu dem ersten Teil (19) der Abstand zwischen der Achse (9) und dem Hauptrahmen (2) verändert werden kann.

4. Heuerntemaschine (1) nach Anspruch 3, wobei der erste Teil (19) A-förmig ausgebildet ist und zwei auseinandergehende Schenkel aufweist, deren beabstandete Enden schwenkbar an dem Hauptrahmen (2) befestigt sind, und wobei nahe den aneinander anliegenden Enden der Schenkel der zweite Teil (20) mit dem ersten Teil (19) verbunden ist.

5. Heuerntemaschine (1) nach Anspruch 3 oder 4, wobei aufgrund des Ausgleichs der sich schräg erstreckenden Gelenklinie (17) der zweite Teil (20) in einer anderen Ebene als der erste Teil (19) liegt.

6. Heuerntemaschine (1) nach einem der Ansprüche 3-5, wobei zwischen dem Hauptrahmen (2) und dem zweiten Teil (20) eine Lenkstange (21) vorgesehen ist.

7. Heuerntemaschine (1) nach Anspruch 6, wobei die Lenkstange ein Aktuator (21) ist, der angeordnet ist, um die Stellung des zweiten Teils (20) relativ zu dem ersten Teil (19) festzulegen.

8. Heuerntemaschine (1) nach Anspruch 6 oder 7, wobei sich eine Lenkstangen-Gelenklinie (22) eines Lagerpunkts zwischen der Lenkstange (21) und dem Hauptrahmen (2) im Wesentlichen parallel zu der Gelenklinie (17) des Lagerarms (7), aber nicht mit dieser zusammenfallend, in einer solchen Weise erstreckt, dass durch ein Neigen des Lagerarms (7) von der Transportstellung in die Betriebsstellung der zweite Teil (20) relativ zu dem ersten Teil geneigt wird, um das Erntegutverarbeitungselement (8) über einen bestimmten Abstand weg von der Gelenklinie (17) zu bewegen.

9. Heuerntemaschine (1) nach einem der vorhergehenden Ansprüche, wobei zwischen dem Hauptrahmen (2) und dem Lagerarm (7) zwei Lagerpunkte vorgesehen sind, die auf derselben Rotationslinie (17) liegen.

10. Heuerntemaschine (1) nach einem der vorhergehenden Ansprüche, wobei die Heuerntemaschine (1) einen zweiten Lagerarm (7) mit einem zweiten Erntegutverarbeitungselement (8) aufweist, wobei der zweite Lagerarm (7) mit dem zweiten Erntegutverarbeitungselement (8) symmetrisch relativ zu dem ersten Lager (7) an dem Hauptrahmen (2) befestigt ist.

11. Heuerntemaschine (1) nach einem der vorhergehenden Ansprüche, wobei zwischen dem Hauptrahmen (2) und dem mindestens einen Erntegutverarbeitungselement (8) eine teleskopische Kopplungswelle (16) vorgesehen ist.

12. Heuerntemaschine (1) nach einem der vorhergehenden Ansprüche, wobei das Erntegutverarbeitungselement (8) einen Radsatz (11) aufweist, um das Erntegutverarbeitungselement (8) während des Transports auf dem Boden abzustützen.

13. Heuerntemaschine (1) nach einem der vorhergehenden Ansprüche, wobei das Erntegutverarbeitungselement (8) ein oder mehrere Rechenelemente aufweist.

## Revendications

1. Machine de fenaison (1) comprenant :
un châssis principal allongé (2) qui comporte une extrémité avant (3) qui est agencée de manière à être fixée sur un véhicule tracteur afin de déplacer la machine fenaison dans une direction normale de déplacement,
un bras de support (7) qui est relié au châssis principal de manière à pouvoir pivoter autour d'un axe d'articulation (17), et
au moins un élément de traitement de culture (8) qui peut tourner autour d'un axe (9) et qui est relié au bras de support,
dans laquelle l'élément de traitement de culture (8), par le mouvement pivotant du bras de support (7) autour de l'axe d'articulation (17), peut être déplacé au moins entre une position opérationnelle et une position de transport,
**caractérisée en ce que**
l'axe d'articulation (17), lorsqu'il est projeté sur un plan vertical et lorsqu'il est projeté sur un plan horizontal, s'étend de manière oblique par rapport à la direction de déplacement normale.

2. Machine de fenaison (1) selon la revendication 1, dans laquelle l'axe d'articulation (17) s'étend dans la direction orientée suivant la direction de déplacement normale vers le châssis principal (2) et vers le haut par rapport au châssis principal (2).

3. Machine de fenaison (1) selon la revendication 1 ou 2, dans laquelle le bras de support (7) comprend une première partie (19) et une seconde partie (20), dans laquelle la première partie (19) est reliée de manière à pouvoir pivoter au châssis principal (2) dans le but de pouvoir déplacer le bras de support (7) entre la position opérationnelle et la position de transport, et dans laquelle la seconde partie (20) est reliée de manière à pouvoir basculer à la première partie (19), dans laquelle, par le basculement de la seconde partie (20) par rapport à la première partie (19), la distance entre l'axe (9) et le châssis principal (2) peut être modifiée.

4. Machine de fenaison (1) selon la revendication 3, dans laquelle la première partie (19) est en forme de A et comprend deux bras divergents dont les extrémités espacées l'une de l'autre sont fixées de manière à pouvoir pivoter sur le châssis principal (2) et dans laquelle, à proximité des extrémités rapprochées des bras, la seconde partie (20) est reliée à la première partie (19).

5. Machine de fenaison (1) selon la revendication 3 ou 4, dans laquelle la seconde partie (20) est dans un plan différent de la première partie (19) au moyen d'une correction de l'axe d'articulation s'étendant de manière oblique (17).

6. Machine de fenaison (1) selon l'une quelconque des revendications 3 à 5, dans laquelle une barre de direction (21) est agencée entre le châssis principal (2) et la seconde partie (20).

7. Machine de fenaison (1) selon la revendication 6, dans laquelle la barre de direction est un actionneur (21) qui est agencé afin de définir la position de la seconde partie (20) par rapport à la première partie (19).

8. Machine de fenaison (1) selon la revendication 6 ou 7, dans laquelle un axe d'articulation de barre de direction (22) d'un point de pivot entre la barre de direction (21) et le châssis principal (2) s'étend sensiblement parallèlement, mais ne coïncide pas avec l'axe d'articulation (17) du bras de support (7), d'une telle manière que, en faisant basculer le bras de support (7) à partir de la position de transport vers la position opérationnelle, la seconde partie (20) est basculée par rapport à la première partie (19) dans le but de déplacer l'élément de culture (8) sur une distance particulière à l'écart de l'axe d'articulation (17).

9. Machine de fenaison (1) selon l'une quelconque des revendications précédentes, dans laquelle entre le châssis principal (2) et le bras de support (7) sont agencés deux points de pivot qui sont placés sur le même axe de rotation (17).

10. Machine de fenaison (1) selon l'une quelconque des revendications précédentes, dans laquelle la machine de fenaison (1) comprend un second bras de support (7) avec un second élément de traitement de culture (8), dans laquelle le second bras de support (7) avec le second élément de traitement de culture (8) est fixé de manière symétrique par rapport au premier bras de support (7), sur le châssis principal (2).

11. Machine de fenaison (1) selon l'une quelconque des revendications précédentes, dans laquelle un arbre d'accouplement télescopique (16) est agencé entre le châssis principal (2) et le ou les éléments de traitement de culture (8).

12. Machine de fenaison (1) selon l'une quelconque des revendications précédentes, dans laquelle l'élément de traitement de culture (8) comprend un ensemble de roue (11) afin de supporter l'élément de traitement de culture (8) sur le sol au cours du transport.

13. Machine de fenaison (1) selon l'une quelconque des revendications précédentes, dans laquelle l'élément de traitement de culture (8) comprend un ou plusieurs éléments formant râteau.
